**Europäisches Patentamt**

**European Patent Office**

**Office européen des brevets**

(19)

(11) Publication number : **0 668 366 A1**

## (12) EUROPEAN PATENT APPLICATION

(21) Application number : **95300437.1**

(22) Date of filing : **25.01.95**

(51) Int. Cl.$^6$ : **C22C 38/18,** C22C 38/26, B01J 23/86, F01N 3/28

(30) Priority : **09.02.94 US 193967**

(43) Date of publication of application : **23.08.95 Bulletin 95/34**

(84) Designated Contracting States : **AT BE DE ES FR GB GR IT NL SE**

(71) Applicant : **ALLEGHENY LUDLUM CORPORATION**
**1000 Six PPG Place**
**Pittsburgh Pennsylvania 15222 (US)**

(72) Inventor : **Larsen, James Martin**
**5037 Bahama Drive**
**Pittsburgh, Pennsylvania 15239 (US)**

(74) Representative : **Coxon, Philip et al**
**Eric Potter & Clarkson**
**St. Mary's Court**
**St. Mary's Gate**
**Nottingham NG1 1LE (GB)**

(54) **Creep resistant iron-chromium-aluminum alloy and article thereof.**

(57)    A hot workable iron-chromium-aluminum ferritic stainless steel alloy is provided being resistant to thermal cyclic oxidation, creep, and secondary grain growth during high temperature exposure due to rare earth and niobium additions suitable for oxidation and creep resistant catalytic substrates and systems.

FIG. I

## BACKGROUND OF THE INVENTION

### Field of Use

This invention relates to thermal cyclic oxidation resistant and hot workable iron-chromium-aluminum alloys with rare earth additions having improved creep resistance.

### Description of the Prior Art

It is known to provide iron-chromium-aluminum alloys having rare earth additions for the purpose of high temperature oxidation resistance and improved oxide surfaces. Generally, such alloys have properties which are useful in high temperature environments which require oxidation resistance and it has been proposed that they may be useful as a substrate material, such as for catalytic converters in the automobile industry, as well as for resistance heating elements and radiant heating elements in gas or oil stoves. As a catalytic substrate, a metallic substrate offers many advantages over present ceramic substrates. For example, a metal substrate is substantially more shock resistant and vibration resistant, as well as having a greater thermal conductivity, than ceramic. Furthermore, a metallic substrate can be more easily fabricated into thin foil and fine honeycomb configurations to provide greater surface area and lighter weight.

U.S. Patent 4,414,023, issued November 8, 1983, discloses an oxidation resistant ferritic stainless steel alloy containing 8-25% chromium, 3-8% aluminum, and the addition of at least 0.002 up to 0.05% rare earths from the group consisting of cerium, lanthanum, neodymium, and praseodymium, with a total of all rare earths up to 0.06%. The alloy may also be stabilized with zirconium or with niobium. Niobium stabilization was based on a formula to provide elevated temperature creep strength after high temperature annealing with the least adverse effect on thermal cyclic oxidation resistance.

U.S. Patent 3,852,063, issued December 3, 1974, describes an iron-chromium-aluminum alloy characterized by high temperature corrosion resistance and high temperature strength. The alloy includes 0.05 to 3.0%, preferably, 0.1 to 0.5% of an element selected from the group consisting of niobium and tantalum and at least one element selected from the group of yttrium, beryllium, and boron. Creep resistance is not described.

In an article by J.N. Johnson entitled "Influence of Columbium on the 870° Creep Properties of 18% Chromium Ferritic Stainless Steels", Society of Automotive Engineers, 1981, paper No. 81 0035, an effect of uncombined columbium (i.e., niobium) is described. Uncombined niobium is not associated with carbon or nitrogen as carbides or nitrides. The paper concludes that creep properties of 18% Cr steel are improved by the combination of uncombined niobium up to 0.6% and a certain high final annealing temperature. It also concludes that creep strength improves linearly with increases in uncombined niobium. The article does not disclose Fe-Cr-Al alloys generally, but does describe one Fe-19.2% Cr-1.9% Al alloy stabilized with titanium. No rare earth additions are disclosed.

U.S. Patent 4,286,986, issued September 1, 1981, discloses a creep resistant stainless steel with 11-20% chromium, 0-5% aluminum, up to 1.5% silicon, up to 5% molybdenum, and specified amounts of niobium ranging from 0.63-1.15%. By annealing the steel to at least 1900°F (1038°C), the creep life at 1600°F (87°C) at 1200 psi (7.3 MPa) is improved. The alloy does not contain any rare earth additions and does not describe thermal cyclic oxidation resistance.

U.S. Patent 4,859,649, issued August 22, 1989, describes a creep and oxidation resistant iron-chromium-aluminum alloy containing 0.1-1.0% molybdenum, 0.003 to 0.8% rare earths, additions of titanium and zirconium, and up to 0.5% niobium for stability and creep resistance.

A rolled high aluminum stainless steel foil for use as a substrate for a catalyst carrier is described in U.S. Patent 4,870,046, issued September 26, 1989. To avoid embrittlement and to aid in stability, the alloy contains at least one element from the group consisting of titanium, niobium, zirconium, and hafnium. There is no disclosure of niobium for purposes of either high temperature strength or creep resistance. The alloy optionally may contain up to 0.5% rare earths and 0.5-5% of molybdenum, tungsten, and cobalt to improve high temperature strength.

U.S. Patent 5,045,404, issued September 3, 1991, describes a heat resistant stainless steel foil for a catalyst carrier being an iron-chromium-aluminum alloy including more than 0.06% rare earths, in the form of lanthanoids, and either or both of titanium and niobium to improve the toughness of the hot rolled strip by stabilizing carbon and nitrogen. Titanium and niobium may be used separately or in combination to improve the toughness without an adverse effect on the oxidation resistant of a catalyst carrier.

Impending automotive emission requirements are pushing new catalytic converter designs so that the creep resistance of the catalytic core alloy is becoming very important. Some designs include a core which is heated by direct current electrical resistance. In order to reduce total weight and limit the amount of electrical power required to heat the core assembly to a desired temperature, there has been an effort to reduce substrate thickness from the current standard of 0.002 inch (0.051 mm.). By reducing the cross section of the foil strip, the thinner material would require a higher mechanical integrity at elevated temperatures. Furthermore, it has been found that the oxide scale growth on fabricated core assemblies can generate tensile stresses in the underlying metal foil substrate that are large enough to cause permanent deformation through creep.

There still exists a need for an iron-chromium-aluminum alloy which can be produced through lower cost melting processes and which is resistant to thermal cyclic oxidation resistance having improved creep resistance while still providing for sufficient hot workability of the alloy. Furthermore, it is desired that an alloy be capable of improving the creep resistance of the alloy in a very controllable manner in order that the production and processing of the alloy to thin foil gauges can be accomplished by minimizing any processing changes, such as annealing, which would increase the production costs for the alloy.

## BRIEF DESCRIPTION OF THE DRAWINGS

Figures 1-4 are plots of stress-rupture tests at 900°C at different niobium levels.
Figure 5 is a plot of a stress-rupture ratio as a function of niobium.

## SUMMARY OF THE INVENTION

In accordance with the present invention, a hot workable ferritic stainless steel alloy is provided which is resistant to thermal cyclic oxidation and creep at elevated temperatures. The alloy consists essentially of, by weight, 10-25% chromium, 3-8% aluminum, up to 4% silicon, up to 1% manganese, up to 0.8% rare earths, an effective amount of niobium (columbium) up to 0.8% for creep resistance, the balance iron and normal steel making impurities.

An oxidation and creep resistant catalytic substrate having a hot workable ferritic stainless steel alloy is also provided.

## DETAILED DESCRIPTION OF THE PREFERRED EMBODIMENTS

In general, there is provided an iron-chromium-aluminum ferritic stainless steel alloy with rare earth additions, the alloy having thermal cyclic oxidation resistance and maintaining good hot workability with improved creep resistance from the addition of controlled amounts of niobium.

As used herein, all composition percentages are percent by weight.

The chromium level may range from 10-25% and preferably from 19 to 21% in order to provide the desired properties, such as corrosion and oxidation resistance. The levels of chromium are limited to avoid unnecessary hardness and strength which could interfere with the formability of the alloy. The adequate and desirable thermal cyclic oxidation resistance can be achieved with chromium as low as 10%. Above 25% chromium, however, there is increased difficulty in fabrication of the alloy.

The aluminum content in the alloy provides increased oxidation resistance at elevated temperatures, reduces the amount of overall chromium needed, and tends to increase the resistance to scaling. Aluminum is necessary in the alloy to provide a source for the formation of the alumina (aluminum oxide-$Al_2O_3$) surface. Generally, the aluminum is present in the alloy ranging from 3-8%. Below about 3% the cyclic oxidation resistance tends to become unacceptably low. Above about 8%, the alloy tends to suffer from lowered workability. Preferably, aluminum ranges from 4.5 to 5.5% to provide the desired combination of oxidation resistance at elevated temperatures, processability of the alloy, and thermal expansion coefficient.

Rare earth metal additions are essential to the adherence of the aluminum oxide surface. Rare earth metals suitable for the present invention may be those from the lanthanide series of 14 rare earth elements. A common source of the rare earths may be as mischmetal which is a mixture primarily of cerium, lanthanum, neodymium, praseodymium, and samarium. Preferably, the alloy contains at least additions of cerium or lanthanum, or a combination of them, to assure adherence of the alumina scale and to provide a scale which is characterized by its ability to be texturized into an aluminum oxide surface having a desirable morphology. Mischmetal is a relatively inexpensive mixture or rare earth elements and may be used as an alloying addition.

The rare earth addition may range up to 0.8% since it primarily affects oxidation resistance and not high temperature creep or stress-rupture of the alloy. Preferably, the alloy of the present invention contains a rare earth addition in the form of at least 0.002% from the group consisting of cerium and lanthanum and a total content of rare earth metals, cerium and lanthanum not to exceed 0.05%. Preferably, the total of all rare earth metals should not exceed about 0.06%, as described in the above-mentioned U.S. Patent 4,414,023. Greater levels of rare earths may or may not improve the resistance to oxidation and scaling or the adherence of the oxide scale, but it does tend to make the alloys unworkable at normal steel hot working temperatures of about 1900°-2350°F (1038°-1288°C). Preferably, the rare earths consist primarily of 0.005 to 0.035% cerium.

Silicon may be present at amounts up to 4% and preferably up to 1%, and more preferably 0.2 to 0.6%. The presence of silicon generally tends to improve the general oxidation resistance and improves the fluidity of the molten metal and the ability to cast the alloy into thin sections. Silicon is also a commonly used element for deoxidation in the production of steel and appears to have only a neutral or slightly beneficial effect upon oxide adherence. Silicon can contribute to the brittleness of the alloy during cold working, which is most notable when the chromium content is below 14%. For that reason, preferably, silicon may range up to 1% without adversely affecting the hot workability of the alloy.

Manganese levels may range up to 1% and preferably up to 0.5%. Such manganese levels provide for efficient fabrication and avoid unnecessary hardness and strength which could interfere with the formability and hot workability of the alloy.

The alloy is substantially free of titanium which appears to have a strong adverse affect on the thermal cyclic oxidation resistance of the alloy. As described in U.S. Patent 4,414,023, stabilizing elements generally will adversely affect thermal cyclic oxidation resistance of the alloy, but titanium appears to have the most adverse effect such as when compared to zirconium and niobium.

The improvement of the present invention is the result of the additions of niobium ranging from an effective amount up to 0.8%, preferably 0.1 to 0.55%, more preferably 0.28 to 0.55%, for creep resistance. As was found in previous work, niobium was found to have the least adverse effect on thermal cyclic oxidation resistance while improving elevated temperature creep strength after high temperature annealing. The present invention shows how specific and controllable improvements in stress-rupture time tests, which are indicative of the creep resistance of the alloy, can be made with controlled additions of niobium. Excessive amounts of niobium can be detrimental to hot workability. The Laves phase precipitation may also increase the work hardening rate at lower temperatures thereby requiring additional annealing steps during cold rolling which would raise the cost of production of the material. Such additional steps become very costly when the alloy is rolled to thin foil gauges. It has been found that the niobium additions can have the effect of retarding recrystallization through the Laves phase grain boundary pinning which results in making hot working more difficult. As a result, higher intermediate and final annealing temperatures, as well as slower line speeds, would be required for cold rolling to thin foil gauges in the event of excessive amounts of niobium.

It has been found that the creep strength of the iron-chromium-aluminum alloy can be predetermined based on the final end-use application of the material in order to avoid unnecessarily large amounts of niobium.

Preferably, niobium may be selected within the preferred range of 0.1 to 0.55% to achieve the desired level of creep resistance to accommodate the creep strength necessary for the end-use application. Such careful selection would optimize production processing in order to define the necessary processing to meet the creep strength requirements. Preferably, niobium may range from 0.28 to 0.55%, or even 0.4 to 0.55% in order to optimize both the creep strength and mechanical behavior of the alloy when fabricated into end-use products which are subjected to certain high temperature vibration tests. It was found that excessive grain growth from very high temperature exposure on the order of greater than about 1900°F (1038°C) may adversely affect short-term mechanical behavior in end-use testing. An additional benefit of controlled amounts of niobium appears to have a beneficial effect on whiskerability, which is the ability to form a uniformly texturized aluminum oxide surface, such as "whiskers." Conventional or known processes for forming the desired aluminum oxide surface may be used with the alloy of the present invention.

In making the alloy of the present invention, a melt of the alloy may be prepared by any conventional processes, including electric arc furnaces, argon-oxygen-decarburization (AOD), and vacuum induction melting processes. The alloy of the present invention does not require special raw material selection or melting processes, such as vacuum melting. Preferably, the normal steel making impurities of oxygen, nitrogen, and sulfur are reduced prior to additions of the rare earths to the melt. The melt can then be cast continuously into slabs, or cast into ingots and worked into plate, bars, strips, or sheets. The steel can then be hot and cold rolled and subjected to conventional processes, such as descaling and annealing, prior to fabrication into the desired shape.

In order to more completely understand the present invention, the following Examples are presented.

Example 1

The alloys of the present invention shown in the following Table I are made by alloying the elements in a molten state. The alloys shown in the Tables were melted by vacuum induction into fifty pound Heats. Generally, the ingots were heated to about 2300°F (1260°C) for hot rolling to bars six inches wide by one inch thick (15.2 x 2.5 cm), then hot rolled to 0.100 inch (0.25 cm) thick. The alloy for Heats RV 597 through RV 603 are shown in the following Table.

## Table I

| | RV 597 | RV 598 | RV 599 | RV 600 | RV 601 | RV 602 | RV 603 |
|---|---|---|---|---|---|---|---|
| Nb | 0.008 | 0.75 | 0.76 | 0.77 | 1.08 | 1.14 | 1.14 |
| Mo | 0.067 | 0.068 | 0.068 | 0.069 | 0.069 | 2.04 | 2.16 |
| Ti | 0.008 | 0.011 | 0.053 | 0.18 | 0.18 | 0.18 | 0.005 |
| Ce | 0.004 | 0.022 | 0.013 | 0.009 | 0.009 | 0.008 | 0.006 |
| La | 0.002 | 0.009 | 0.007 | 0.006 | 0.005 | 0.004 | 0.003 |
| Cr | 19.87 | 20.06 | 20.10 | 20.04 | 19.97 | 20.30 | 20.33 |
| Al | 5.18 | 5.15 | 5.02 | 5.12 | 5.16 | 5.12 | 5.09 |
| Si | 0.45 | 0.51 | 0.51 | 0.49 | 0.51 | 0.49 | 0.51 |
| Mn | 0.27 | 0.26 | 0.26 | 0.26 | 0.25 | 0.24 | 0.25 |
| C | 0.018 | 0.010 | 0.009 | 0.008 | 0.012 | 0.008 | 0.007 |
| Ni | 0.15 | 0.15 | 0.15 | 0.15 | 0.15 | 0.16 | 0.16 |
| P | 0.012 | 0.013 | 0.013 | 0.012 | 0.013 | 0.010 | 0.009 |
| N | 0.0012 | 0.0053 | 0.0038 | 0.0011 | 0.0021 | 0.0054 | 0.0069 |
| S | 0.0023 | 0.0016 | 0.0014 | 0.0038 | 0.0026 | 0.0024 | 0.0025 |
| Ca | <0.0005 | <0.0005 | <0.0005 | <0.0005 | <0.0005 | <0.0005 | <0.001 |
| Mg | <0.0005 | <0.0005 | <0.0005 | <0.0005 | <0.0005 | <0.0005 | <0.001 |

Heat RV 597 had the best hot workability and exhibited no cracking during hot working. Heat RV 600, having the highest titanium level, exhibited the most extensive cracking during hot rolling. The remaining Heats all exhibited some cracking. It was observed that increasing levels of niobium eventually lead to complete unworkability in the hot condition. Although the alloys at about 0.8% niobium were considered workable, those alloys did require more grinding conditioning after ingot breakdown to remove small cracks than those alloys containing 0.55% or less niobium.

Heat RV 597 was melted to a typical commercial alloy composition in accordance with U.S. Patent 4,414,023 and is treated as the Control Heat.

### Table II

| | RV 631 | RV 632 | RV 633 | RV 634 | RV 635 | RV 636 | RV 702 |
|---|---|---|---|---|---|---|---|
| **Nb** | 0.82 | 0.55 | 0.28 | .54 | 0.28 | 0.54 | 0.43 |
| **Mo** | 0.09 | 0.089 | 0.089 | 1.03 | 0.13 | 0.09 | 0.034 |
| **Ti** | 0.003 | 0.008 | 0.008 | 0.009 | 0.20 | 0.21 | - |
| **Ce** | 0.017 | 0.019 | 0.011 | 0.018 | 0.017 | 0.014 | 0.013 |
| **La** | 0.002 | 0.003 | 0.003 | 0.003 | 0.002 | 0.003 | - |
| **Cr** | 19.98 | 19.90 | 19.96 | 20.18 | 19.93 | 20.05 | 19.88 |
| **Al** | 5.40 | 5.34 | 5.32 | 5.25 | 5.18 | 5.29 | 5.14 |
| **Si** | 0.47 | 0.51 | 0.50 | 0.50 | 0.50 | 0.50 | 0.49 |
| **Mn** | 0.25 | 0.25 | 0.25 | 0.24 | 0.25 | 0.24 | 0.25 |
| **C** | 0.014 | 0.014 | 0.014 | 0.013 | 0.013 | 0.014 | 0.010 |
| **Ni** | 0.12 | 0.13 | 0.12 | 0.12 | 0.13 | 0.13 | 0.14 |
| **P** | 0.012 | 0.013 | 0.011 | 0.011 | 0.012 | 0.012 | 0.013 |
| **N** | 0.0014 | 0.0014 | 0.0014 | 0.0015 | 0.0014 | 0.0014 | - |
| **S** | 0.0036 | 0.0022 | 0.0020 | 0.0022 | 0.0044 | 0.0021 | 0.0008 |
| **Ca** | 0.001 | 0.001 | <0.001 | <0.001 | 0.002 | <0.001 | <0.0005 |
| **Mg** | <0.001 | <0.001 | <0.001 | <0.001 | <0.001 | <0.001 | - |

Example 2

Another series of alloys shown Table II were melted in a manner similar to that described in Example I. The alloys of Table II and Heats RV 597 and RV 601 were also cold rolled from the 0.100 inch (0.25 cm) hot roll band gauge to the cold rolled gauge of 0.030 inch (0.076 cm). The hot roll band was descaled, conditioned as necessary, and then cold rolled. Some of the strip was preheated or intermediate annealed, if necessary, before cold rolling to final gauge. The cold rolled strip was then annealed at various time and temperature conditions to determine the recrystallization behavior of each of the alloys as shown in Table III. The valves of Table III are ASTM grain sizes where increasing valves of 1 to 10 mean decreasing grain sizes from large to fine. When two values are noted, two distinct grain sizes were observed when using a visual template.

Table III

| RECRYSTALLIZATION AND GRAIN SIZE | | | | | | | |
|---|---|---|---|---|---|---|---|
| Temp. °F (°C) | Time Minutes | HEAT (WT. % NIOBIUM) | | | | | |
| | | RV 597 (.008 Nb) Control Heat | RV 633 (.28Nb) | RV 702 (.42Nb) | RV 632 (.55Nb) | RV 631 (.82Nb) | RV 601 (l.08 Nb) |
| 1600 (871) | 10 | 7.5 | 7.5 | 5.5, 10 | U | U | U |
| | 30 | 7 | 7 | 6, 10 | U | U | U |
| 1700 (927) | 10 | 5 | 7.5 | 7.5, 10 | U | U | U |
| | 30 | 4.5 | 7 | 6, 10 | U | U | U |
| 1800 (982) | 10 | 4 | 7.5 | 7, 9 | 7 | U | 7 |
| | 30 | 2 | 7 | 7, 9 | 7.5 | U | 7.5 |
| 1900 (1038) | 10 | 2 | 6 | 6.5, 2 | 6 | P, 3, 4 | 6 |
| | 30 | >1 | <1, 8 | 7, 1 | 5 | P, 7, 5 | 5 |
| 1950 (1066) | 10 | 1 | 5 | 7, 4 | 5.5 | 5 | 5.5 |
| | 30 | >1 | <1, 6 | 7, 1 | 4 | 4 | 4 |
| 2000 (1093) | 10 | - | 4.5 | 6, 2 | 5 | 5 | 5 |
| | 30 | - | <1, 6 | 6, 1 | 3 | 3 | 3 |

In Table III, the letter "P" means partially recrystallized where remnants of a cold-worked structure still exist and the letter "U" means un-recrystallized where there is no evidence of recrystallized grains. The data shows that niobium retards recrystallization as shown by the excessive grain growth from very high temperature exposure, such as that on the order of $\geqq 1900°F$. For example, Heat RV 633, having 0.28% niobium, shows recrystallization as low as 1600°F (870°C); whereas, the Heats RV 631 and RV 601 containing niobium of 0.82% and 1.08%, respectively, require temperatures on the order of 1800-1900°F (982-1038°C). In view of such information, one would expect that higher intermediate and final annealing temperatures and as a result, slower production line speeds, would be required to cause recrystallization in the presence of niobium.

Table IV

| ALLOY HEAT | NIOBIUM (wt. %) | $T_R$ °F | $T_G$ °F |
|---|---|---|---|
| RV 597 (Control Heat) | .008 | 1600 | 1900 |
| RV 633 | .28 | 1600 | 1900 |
| RV 702 | .42 | 1700-1800 | 1900 |
| RV 632 | .55 | 1800 | >2000 |
| RV 631 | .82 | 1800-1900 | >2000 |
| RV 601 | 1.08 | 1800 | >2000 |

$T_R$ means the temperature to result in ASTM #7 grain size at 10 minutes time at temperature.

$T_G$ means the temperature to result in ASTM #1 grain size at 30 minutes time at temperature.

Table IV summarizes the data in Table III and shows that increasing niobium content increases the temperature requirements to achieve ASTM #7 grain size upon primary recrystallization. This means that slightly higher intermediate annealing temperatures would be needed to recrystallize cold-worked structure.

However, in end-use high temperature applications, such as automotive exhause systems, maintaining a recrystallized and stable grain size is important. Large and increasing grain sizes would lead to brittleness problems in the end-use of the final product. It is believed that Laves phase precipitates limit dislocation motion at higher temperatures, thereby increasing creep strength. Furthermore, such precipitates are believed to pin grain boundaries which restricts excessive grain growth. Table III shows excessive grain growth for Heats RV 597, 633, and 702 by the presence of ASTM #1 and 2 grains. Such grain growth is believed to be related to too few Laves precipitates and their dissolution at higher temperatures. The other Heats are believed to have many more Laves precipitates, including more of the larger precipitates. As a result, the precipitates take longer to dissolve and thereby retard or delay secondary recrystallization.

Example 3

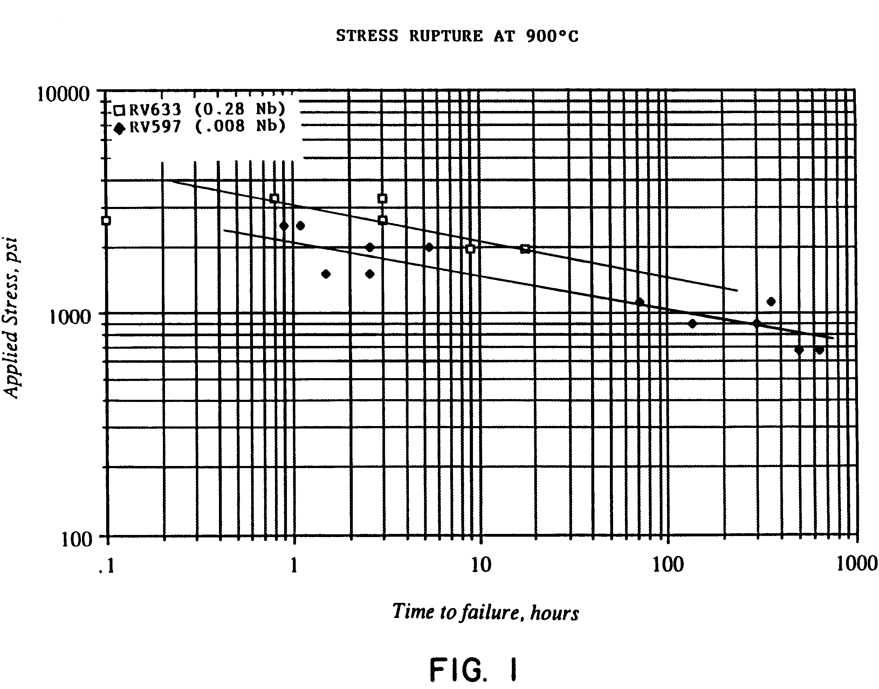

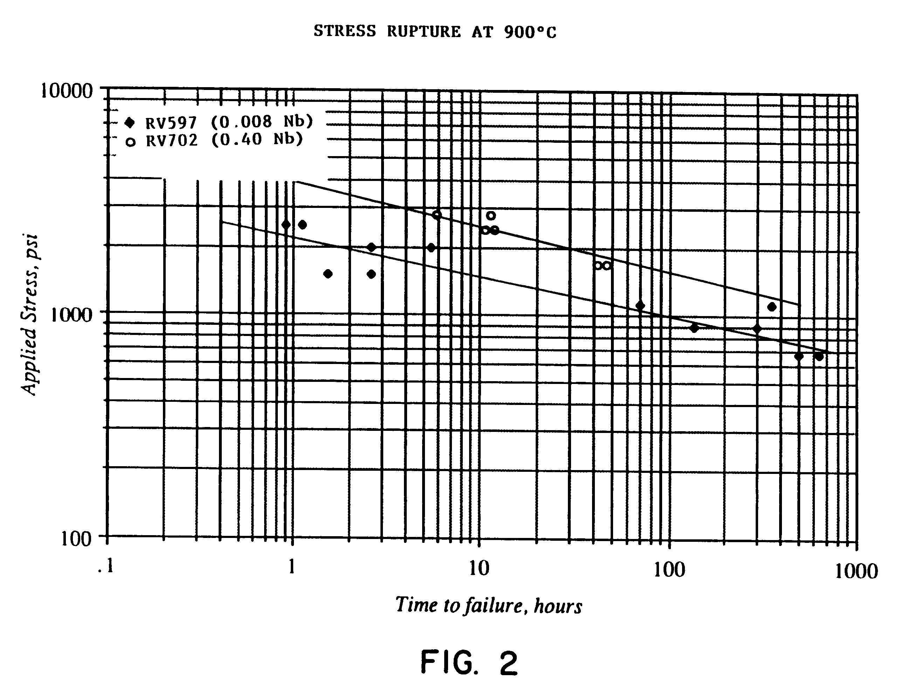

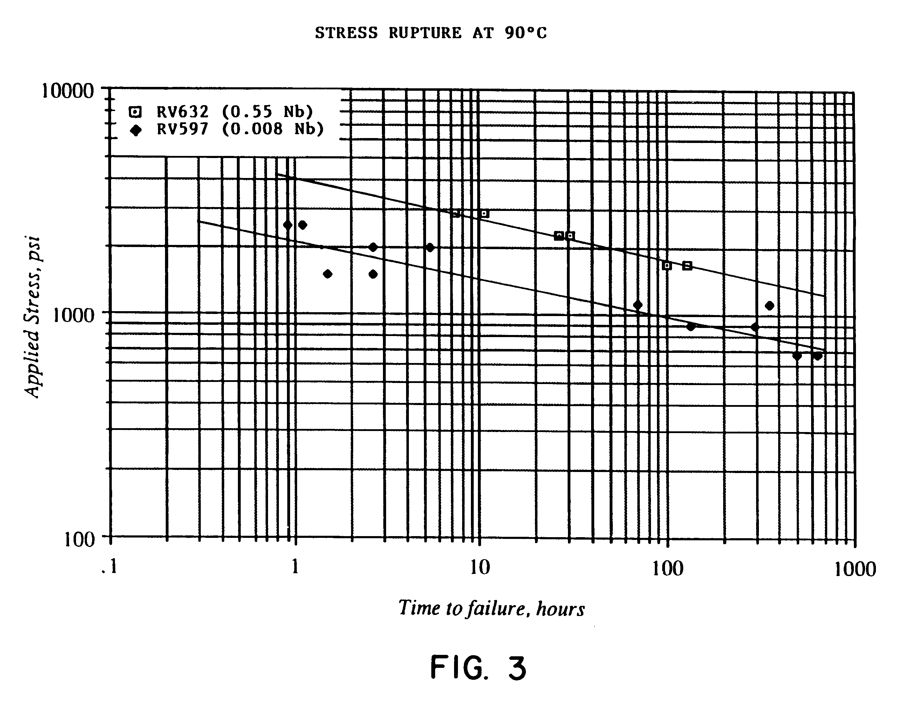

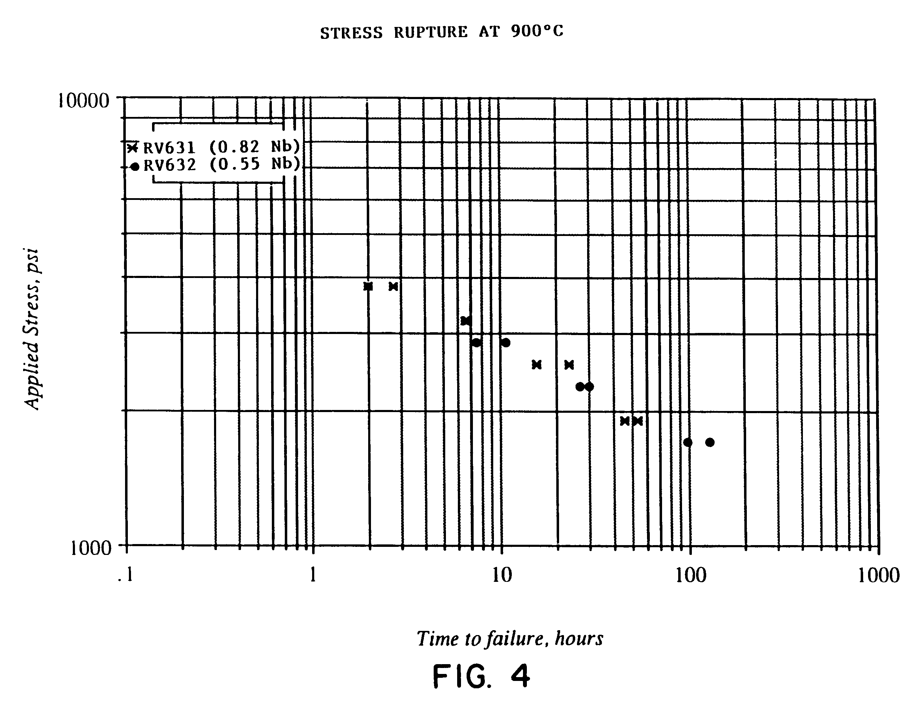

In order to demonstrate the creep resistance of the alloy of the present invention, the Heats of Tables I and II were studied by conducting stress-rupture tests at various temperatures on cold rolled strip at 0.030 inch (0.076 cm) gauge. The stress-rupture test is conducted by applying a static tensile load to a heated alloy specimen according to the method ascribed in ASTM E-139, and measuring the time for the specimen to break. Stress-rupture data generated at 900°C is shown graphically in Figures 1 through 4. Figure 1 illustrates the stress-rupture data for the Control Heat and Heat RV 633 having 0.28% niobium. Figures 2 and 3 show a similar comparison between the Control Heat and Heat RV 702 having 0.40% niobium and Heat RV 632 having 0.55% niobium, respectively. Figure 4 compares Heat RV 632 with Heat RV 631. Figure 4 clearly illustrates that there is no further benefit to creep resistance by adding niobium at levels above about 0.55%.

Stress-rupture data at 900°C was also generated for Heats RV 598, 599, and 600, each containing about 0.75% niobium with respective additions of 0.011, 0.053, and 0.18% titanium. Rupture times for these three Heats were substantially the same, indicating that titanium has no effect concerning the creep resistance. However, Heat RV 600, which had the highest titanium contents of 0.18%, did exhibit extensive cracking during hot rolling. Figures 1, 2, and 3 clearly show the effects of niobium at levels below 0.8%. Niobium additions of as little as 0.28% cause a noticeable improvement in rupture times. No discernable difference in rupture times was observed between 0.55 and 0.82% at either 850°C (1562°F) or 900°C (1652°F).

From Figures 1 through 3, it can be concluded that additions of 0.28% niobium will increase rupture time which indicates improved creep resistance by approximately a factor of 10 and that increasing this to 0.55% will yield a further improvement of approximately a factor of 30.

Similar stress-rupture data was generated at 850°C. The data of Heats RV 631, 632, 633, and 634 at 900°C were compared with the stress-rupture data at 850°C for Heat RV 597, the Control Heat. Based on such a comparison, Heat RV 633 exhibited stress-rupture characteristics equal to RV 597 while being tested at a temperature of 50°C higher. It can be concluded that alloys of the present invention having controlled amounts of niobium within the broad range of up to 0.8% and within the preferred range of 0.1 to 0.55% exhibit even greater resistance to creep at higher temperatures when compared with alloys having insufficient amounts of niobium.

The improvements of the present invention may be summarized by comparing the stress-rupture behavior in terms of the time-to-failure at a stress of 2000 psi at 900°C for several selected Heats. As shown in Table V, the time-to-failure for Heats RV 597, 633, 702, and 632 are compared.

**Table V**

| STRESS RUPTURE RATIO | | |
|---|---|---|
| **HEAT** | $t_f$**(hours)** | $t_f/t_f$**(RV597)** |
| RV 597 (Control Heat) | 1.5 | 1 |
| RV 633 (.28 Nb) | 15 | 10 |
| RV 702 (.43 Nb) | 30 | 20 |
| RV 632 (0.55 Nb) | 45 | 30 |

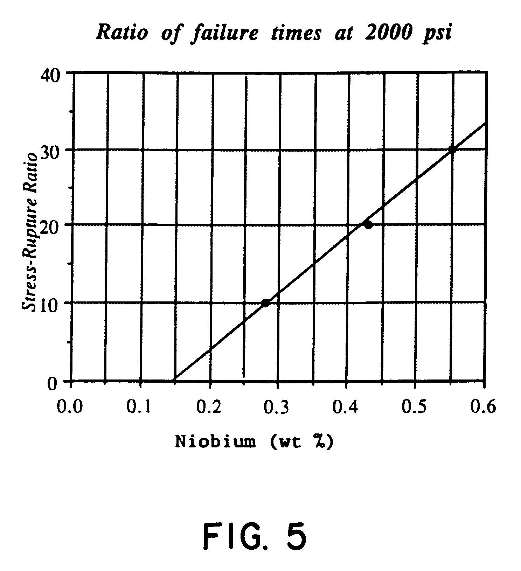

The stress-rupture ratio here is calculated by comparing the time-to-failure ($t_f$) of the alloys of the present invention at 2000 psi stress to time-to-failure of the Control Heat, RV 597. All of the alloys exhibit linear and parallel log stress v. log $t_f$ behavior in Figure 5. For that reason, the ratios are representative of improvements at any applied stress. As shown by Figure 5, the stress-rupture behavior steadily and predictably improves with increasing niobium content of more than 0.1% up to 0.55%. This predictability enables the steel producer to carefully choose the level of niobium that will accommodate a particular end-user requirement, while avoiding excessive niobium which would result in unnecessary steps and problems associated with processing the material to final gauge.

The hot workable ferritic stainless steel alloy of the present invention having good thermal cyclic oxidation resistance has improved creep resistance as measured by stress-rupture testing which can be adjusted by careful composition control. The advantage of the present invention is that controlled additions of niobium will limit processability problems associated with hot working, and limit increases in intermediate annealing temperatures and/or decreases in annealing line speeds. The alloy of the present invention benefits from improved creep resistance and resistance to secondary grain growth as a result of Laves phase precipitates. Such benefits outweigh the requirement of slightly increased intermediate annealing temperature, higher work hardening rates and hot workability affects of niobium. Such improvements have been achieved without a loss of oxidation resistance, which is one of the most important properties for some end-use applications for the material, such as for catalytic substrates.

While several embodiments of the present invention have been shown and described, it will be apparent to those skilled in the art that modifications can be made therein without departing from the scope of the invention.

**Claims**

1. A hot workable ferritic stainless steel alloy resistant to thermal cyclic oxidation and creep, the alloy comprising, by weight percent, 10-25 chromium, 3-8 aluminum, up to 4 silicon, up to 1 manganese, up to 0.8 rare earths, an effective amount of up to 0.8 niobium for creep resistance, the balance iron and normal steel making impurities.

2. The alloy of claim 1 having 0.1 to 0.55 niobium.

3. The alloy of claim 2 having 0.28 to 0.55 niobium to control grain growth during high temperature exposure.

4. The alloy of any one of the preceding claims being substantially free of titanium.

5. The alloy of any one of the preceding claims having 0.002 to 0.06 rare earths.

6. The alloy of any one of the preceding claims having 19 to 21 chromium, 4.5 to 5.5 aluminum, 0.2 to 0.6 silicon, 0.1 to 0.55 niobium, and the primary constituent of rare earths being 0.005 to 0.035 cerium.

7. An oxidation and creep resistant catalytic substrate comprising a hot workable ferritic stainless steel alloy of any one of claims 1 to 6.

8. A catalyst system comprising the substrate of claim 7.

9. A hot workable ferritic stainless steel alloy resistant to thermal cyclic oxidation and creep and secondary grain growth during high temperature exposure, the alloy comprising, by weight percent, 19 to 21 chromium, 4.5 to 5.5 aluminum, up to 1 silicon, up to 1 manganese, 0.005 to 0.035 cerium, 0.28 to 0.55 niobium, the balance iron and normal steelmaking impurities.

STRESS RUPTURE AT 900°C

RV633 (0.28 Nb)
RV597 (.008 Nb)

Applied Stress, psi

Time to failure, hours

FIG. I

EP 0 668 366 A1

STRESS RUPTURE AT 900°C

RV597 (0.008 Nb)
RV702 (0.40 Nb)

Applied Stress, psi

Time to failure, hours

FIG. 2

FIG. 3

EP 0 668 366 A1

STRESS RUPTURE AT 900°C

RV631 (0.82 Nb)
RV632 (0.55 Nb)

Time to failure, hours

Applied Stress, psi

FIG. 4

**Ratio of failure times at 2000 psi**

FIG. 5

European Patent Office

# EUROPEAN SEARCH REPORT

Application Number

EP 95 30 0437

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,X | EP-A-0 091 526 (ALLEGHENY LUDLUM STEEL) 19 October 1983<br>* Tables, in particular samples RV8849C and RV8885C *<br>--- | 1,4,5,7,8 | C22C38/18<br>C22C38/26<br>B01J23/86<br>F01N3/28 |
| D,X | EP-A-0 429 793 (NIPPON STEEL CORP ;TOYOTA MOTOR CO LTD (JP); NIPPON KINZOKU CO LTD) 5 June 1991<br>*Tables, in particular examples A8 and A9 *<br>--- | 1,2,7,8 | |
| D,X | EP-A-0 290 719 (THYSSEN EDELSTAHLWERKE AG) 17 November 1988<br>* Table, in particular example D *<br>--- | 1 | |
| X | PATENT ABSTRACTS OF JAPAN<br>vol. 016 no. 394 (C-0976) ,21 August 1992<br>& JP-A-04 128343 (NIPPON STEEL CORP) 28 April 1992,<br>* abstract *<br>--- | 1-4,7,8 | |
| X | PATENT ABSTRACTS OF JAPAN<br>vol. 014 no. 582 (C-0792) ,26 December 1990<br>& JP-A-02 254136 (NIPPON STEEL CORP;OTHERS: 02) 12 October 1990,<br>* abstract *<br>--- | 1,2,4,7 | TECHNICAL FIELDS SEARCHED (Int.Cl.6)<br>C22C<br>B01J<br>F01N |
| X | DATABASE WPI<br>Week 7508<br>Derwent Publications Ltd., London, GB;<br>AN 75-13515W<br>& JP-A-49 115 927 (KAWASAKI STEEL CORP) , 6 November 1974<br>* Tables, in particular examples 24-26 *<br>* abstract *<br>--- | 1,2,4 | |

-/--

The present search report has been drawn up for all claims

| Place of search | Date of completion of the search | Examiner |
|---|---|---|
| MUNICH | 2 June 1995 | Pivalica-Bjoerk, P |

EPO FORM 1503 03.82 (P04C01)

| | European Patent Office | EUROPEAN SEARCH REPORT | Application Number EP 95 30 0437 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | SOCIETY OF AUTOMOTIVE ENGINEERS, vol. 810035, 1981 PENNSYLVANIA, USA, pages 1-13, JOHNSON, J.N. 'INFLUENCE OF COLUMBIUM ON THE 870 C CREEP PROPERTIES OF 18% CHROMIUM FERRITIC STAINLESS STEELS' ----- | 1-3 | |
| | | | **TECHNICAL FIELDS SEARCHED (Int.Cl.6)** |

The present search report has been drawn up for all claims

| Place of search | Date of completion of the search | Examiner |
|---|---|---|
| MUNICH | 2 June 1995 | Pivalica-Bjoerk, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)